# EUROPEAN PATENT SPECIFICATION

(11) **EP 4 551 855 B1**
(45) Date of publication and mention of the grant of the patent: **09.12.2026**
(21) Application number: 23750539.1
(22) Date of filing: 28.07.2023
(51) Int. Cl.: F16L 11/08

(54) **PERMEATION-BARRIER AND METHOD OF MANUFACTURE**
PERMEATIONSSPERRE UND HERSTELLUNGSVERFAHREN DAFÜR
BARRIÈRE DE PERMÉATION ET PROCÉDÉ DE FABRICATION

(30) Priority: 29.07.2022 GB 202211143
(43) Date of publication of application: 14.05.2025
(73) Proprietor: Baker Hughes Energy Technology UK Limited, Bristol BS48 1BS (GB)
(72) Inventor: PIRES, Fabio De Souza, Newcastle-Upon-Tyne Tyne and Wear NE6 3PF (GB); MACEDO, Andre Leao, Newcastle-Upon-Tyne Tyne and Wear NE6 3PF (GB); CLEMENTS, Richard Alasdair, Newcastle-Upon-Tyne Tyne and Wear NE6 3PF (GB); ROBERTS, Andrew Peter, Newcastle-Upon-Tyne Tyne and Wear NE6 3PF (GB); RUSSELL, Colin William, Newcastle-Upon-Tyne Tyne and Wear NE6 3PF (GB); KENDALL, Garry Ian, Newcastle-Upon-Tyne Tyne and Wear NE6 3PF (GB)
(74) Representative: Novagraaf Group
(86) International application number: PCT/EP2023/025357
(87) International publication number: WO 2024/022617

(56) References cited:
- WO-A1-2008/077409
- WO-A1-2011/050810
- WO-A1-2011/073687
- US-A1- 2010 154 916
- US-A1- 2014 305 532
- US-B1- 6 338 365

## Description

### Technical field

The present invention relates to a flexible pipe body including a permeation-barrier and a method of manufacturing said flexible pipe body. In particular, but not exclusively, the present invention relates to a flexible pipe body including a permeation-barrier layer and a smoothing layer for reducing fluid permeation.

### Background

Flexible pipe is particularly useful in connecting a sub-sea location (which may be deep underwater) to a sea level location. The pipe may have an internal diameter of typically up to around 0.6 metres (e.g. diameters may range from 0.05 m up to 0.6 m). Flexible pipe is generally formed as an assembly of a flexible pipe body and one or more end fittings. The flexible pipe body is typically formed as a combination of layered materials that form a pressure-containing conduit. The pipe structure allows large deflections without causing bending stresses that impair the pipe's functionality over its lifetime. The flexible pipe body is generally built up as a combined structure including polymer, and/or metallic, and/or composite layers. For example, a flexible pipe body may include polymer and metal layers, or polymer and composite layers, or polymer, metal and composite layers.

API Recommended Practice 17B provides guidelines for the design, analysis, manufacture, testing, installation, and operation of flexible pipes and flexible pipe systems for onshore, subsea and marine applications. API Specification 17J titled "Specification for Unbonded Flexible Pipe" defines the technical requirements for safe, dimensionally and functionally interchangeable flexible pipes that are designed and manufactured to uniform standards and criteria.

Flexible pipe body typically includes a fluid-retaining layer (known as a barrier layer or liner) formed generally as a polymer sheath or pressure sheath. Such a layer operates as a primary fluid retaining layer. To prevent rupture of such a layer caused by the pressure of the transported fluid, an interlocked wire layer (known as a pressure armour layer) is often located radially outwards of the fluid-retaining layer. A typical flexible pipe body includes one or more armour layers, optionally including a pressure armour layer. The primary load on such layers is formed from radial forces. Pressure armour layers often have a specific cross section profile to interlock so as to be able to maintain and absorb radial forces resulting from outer or inner pressure on the pipe. The cross-sectional profile of the wound wires which thus prevent the pipe from collapsing or bursting as a result of pressure are sometimes called pressure-resistant profiles. When armour layers are formed from helically wound wires forming hoop components, the radial forces from inner or outer pressure on the pipe cause the hoop components to expand or contract, putting respectively tensile or compressive loads on the wires.

One or more tensile armour layers may be positioned radially outward of a pressure armour layer(s). Tensile armour is used to sustain tensile loads and internal pressure. The tensile armour layer is often formed from a plurality of wires (to impart strength to the layer) that are located over an inner layer and are helically wound along the length of the pipe. The tensile armour layers are often metallic layers, formed from carbon steel, for example, however may alternatively be composite tendons, of a matrix material reinforced with suitable fibres, for instance of glass, carbon, aramid, basalt, or metal

Flexible pipe is utilised to transport production fluids, such as oil and/or gas and/or water, from one location to another. As used herein "fluid" includes both liquid and gases substances. When a production fluid is conveyed through a flexible pipe, fluids such as carbon dioxide and hydrogen sulphide gases, for example can permeate the inner most layers of the flexible pipe body (for example the internal pressure sheath). As used herein, permeation, particularly permeation of a fluid through a layer of a flexible pipe, may include both transmission of the fluid through a body of the layer as well as leakage of the fluid through discontinuities or gaps in the layer, the particular meaning being readily apparent from the context of the accompanying description.

These fluids then accumulate in the pipe annulus. This may result in a corrosive environment, in particular when associated with water present in the annulus, for example during a annulus flooding event. The corrosive environment is known to lead to pipe failure due to stress corrosion cracking of the metallic pipe layers for example. Corrosion may be accelerated by a high temperature, for example when a flexible pipe body is transporting high temperature production fluids. Furthermore, a build-up of annulus fluids can cause over pressurization and mechanical failure of the flexible pipe.

Typically, a flexible pipe body provides a tape layer radially outward of the internal pressure sheath. As used herein, a tape refers to an elongate material provided in a wrapable or windable form, so as to form a layer by winding around an underlying, or radially inward, layer of the flexible pipe body. The tape layer is typically formed by winding a tape around the internal sheath layer so that a longitudinal edge of a first tape wrap overlaps the opposing longitudinal edge of the tape of a laterally adjacent tape wrap.

A problem of certain flexible pipe bodies is that fluid permeates through the internal pressure sheath, to a pipe annulus. Fluid may permeate to the pipe annulus by the transmission through a body of a layer. Additionally, or alternatively, fluid may permeate to the pipe annulus by leakage through discontinuities or gaps in a layer. In particular, while winding provides overlapping edges along the longitudinal edge of a tape, the reliability of the seal to prevent leaks depends upon surface to surface engagement. Repetitive flexing causes the overlapping surfaces to disengage from one another. Thus, fluid leaks due to it being forced between adjacent tape wraps by the pressure of the production fluids transported in the fluid pipe.

In certain examples, a flexible pipe body includes an extruded polymer liner over-wound with consecutive tape wraps of metal and polymer. A void, formed by the metal tape edges upon winding onto an underlying layer, is filled with pliable filler material. Nevertheless, the pliable filler material simply abuts the metal tape edges meaning fluid may still leak due to it being forced between metal tape and pliable filler material by the pressure of the production fluids transported in the fluid pipe.

A further problem of using wound tape is that voids and / or overlapping regions provide an uneven surface for overlying layers, that are radially outer layers. Applying an adjacent layer to an uneven surface increases the propensity for wear between contacting surfaces, for example due to relative movement between the layers causing friction. The useful life of the flexible pipe body is thereby reduced. Applying an adjacent layer to an uneven surface may also increase the propensity for instability of the overlying layers, particularly those which interlock, presenting a risk that the interlock between adjacent windings may be lost and void spaces open wide between the constraining armour elements, allowing pressure to push underlying layers through said void space, potentially leading to failure of the pipe body to contain pressurised fluids.

Prior patent document WO2011/050810A1 describes a flexible pipe comprising an axis and a tubular innermost sealing sheath surrounding said axis, said innermost sealing sheath being surrounded by at least one outer armoring layer. Prior patent document US2014/305532A1 describes an unbonded flexible pipe for subsea transportation of fluids. Prior patent document US6338365B1 describes a flexible piping structure having in combination, from the axis of the pipe towards the exterior, a cylindrical, metal inner sealing tube, a layer resistance to internal and external pressures and a sealing sheath made from extruded plastics material.

It is an aim of certain examples of the present invention to permeation-barrier to solve, mitigate or obviate, at least partly, at least one of the problems and/or disadvantages associated with the prior art. Certain examples aim to provide at least one of the advantages described below.

### Summary of the Invention

The invention is set out in the appended claims.

According to an aspect of the invention, there is provided a flexible pipe body for transporting production fluids, the flexible pipe body including:
an internal pressure sheath;
a helically wound metallic armour layer radially outward of the internal pressure sheath;
a permeation-barrier layer disposed radially inside the helically wound metallic armour layer; and
a smoothing layer disposed radially between the permeation-barrier layer and the helically wound metallic armour layer.

By providing a smoothing layer an essentially cylindrical surface is provided for receiving a metallic armour layer. The smoothing layer thereby easily receives the metallic armour layer, simplifying manufacture of the flexible pipe body. Furthermore, the smoothing layer may isolate both the underlying permeation-barrier layer, and optionally any connection element, from the radially outward metallic armour layer. Friction and wear between the metallic armour layer and any uneven surface of the permeation-barrier layer or connection element may be reduced or prevented, increasing the useful lifetime of the flexible pipe body.

Additionally, by incorporating a permeation-barrier layer, permeation of the undesirable fluids from the production fluids to the pipe annulus, typically by transmission, is thereby further reduced or even prevented. Permeation is prevented while ensuring reliability and integrity of the permeation-barrier.

The permeation-barrier layer may be disposed between the internal pressure sheath and the helically wound metallic armour layer.

The permeation-barrier layer includes at least one helically wound tape. The permeation-barrier thereby includes a helically wound permeation-barrier tape.

Suitably, the smoothing layer is positioned radially inward of and directly adjacent to the helically wound pressure armour layer.

Suitably, the smoothing layer and the permeation-barrier layer are positioned radially inward of the internal pressure sheath and radially outside of a sacrificial or wear layer provided over a carcass, the carcass being the inner-most layer of the flexible pipe body in this case. Such a sacrificial or wear layer may be provided as a helically wound tape or as an extrusion over the carcass, and typically comprises a polymer. The sacrificial or wear layer may comprise any suitable polymer, for instance, but not limited to, polyethylene, polypropylene, polyamide, Polyester, polyurea, PEEK, PEKK, or PVDF.

Suitably, the helically wound tape of the permeation-barrier layer includes a lay angle relative to an axis of the flexible pipe body in a range from greater than 20° to less than 87° and, more suitably, in a range from 50° to less than 80°.

Suitably, the helically wound tape includes one or more of a polymeric material, a metallic material, a metal containing composition or a combination thereof.

Suitably, the helically wound metallic armour layer includes at least one helically wound metallic tape having a first longitudinal edge and a second longitudinal edge, and further includes a region of overlap coextending with the first longitudinal edge of a first tape wrap of the helically wound metallic tape and the second longitudinal edge of a second tape wrap.

Suitably, the helically wound metallic armour layer includes a helically wound metallic tape with a lay angle relative to an axis of the flexible pipe body of at least 80°.

The at least one helically wound tape of the permeation-barrier layer includes a body portion configured to lay around a circumference of the flexible pipe body and a first protrusion and a second protrusion opposed the first protrusion with the body portion therebetween. The permeation-barrier layer is wound such that the second protrusion of a first tape wrap is laterally adjacent to a first protrusion of a second tape wrap. Suitably, the second protrusion of a first tape wrap is directly laterally adjacent a first protrusion of a second tape wrap. More suitably the second protrusion of a first tape wrap abuts a first protrusion of a second tape wrap. More suitably the second protrusion of a first tape wrap is formed into an interlock with the laterally adjacent first protrusion of a second tape wrap. The interlock between the first and second tape wraps may be an interleaving or overlapping of the tapes where the protrusion portion of the first tape is bent around the protrusion portion of the second tape to create a seam. Optionally the interlock may be secured using a bonding material or weld.

Suitably, the body portion of the at least one tape of the permeation-barrier layer includes an at least partially hollow structure. The hollow structure thereby extends longitudinally along the permeation barrier tape.

Suitably, the at least partially hollow structure encapsulates an insulation material. Most suitably, the insulation material comprises a resin material. Suitably the resin material comprises a polypropylene or another polyolefin, or a polyamide, or a polyvinyl chloride, or a fluoropolymer, or a TV resin, or thermoplastic elastomer. Suitably, the resin material may include a dispersion of glass microspheres to further improve the insulation performance.

The flexible pipe body further includes a connection element configured to engage both the second protrusion of the first tape wrap and the laterally adjacent first protrusion of a second tape wrap. Suitably, the connection element enclosingly engages both the second protrusion of the first tape wrap and the laterally adjacent first protrusion of a second tape wrap.

Suitably, the connection element is a clip with generally a C-shape cross section. Suitably, the connection element is a resilient material which resists separation of the first tape wrap and second tape wrap beyond what is required to enable the pipe body to be bent, but may allow a sliding displacement of the first tape wrap with respect to the second tape wrap in their length directions.

As will be understood, the connection element may be configured to engage a corresponding feature of any suitable laterally adjacent first and second tape wraps. In this way, the connection element may engage protrusions, longitudinal edges or the body portion of tape wraps. The tape wraps may include a body portion with or without a hollow structure. Similarly, or alternatively the connection element may be configured to include a body portion with a hollow structure.

Suitably, the connection element is a strip or tape.

Suitably, the connection element comprises a metal (for instance stainless steel, or titanium, or nickel alloy or aluminium alloy), or a polymer (for instance a polyurethane, or a polycarbonate, or a polyamide, or a PVDF, or a PEEK or a PEKK, or a fluoropolymer, or a composite of any of the aforementioned polymers and comprising reinforcement fibres. Suitably, the connection element comprises the same material as the helically wound tape of the permeation-barrier layer.

Suitably, a sealing element configured to coextend between the second protrusion of the first wrap and the laterally adjacent first protrusion of the second wrap. Any laterally adjacent tape wraps and accompanying connection element such as those described herein may be configured to optionally accommodate a sealing element between the first tape wrap and the laterally adjacent second tape wrap.

Suitably, the sealing element may comprise a polymer, or a rubber material, for instance a nitrile rubber, or a fluoroelastomer, or a polyurea or polyurethane or silicone material.

Suitably, the permeation-barrier and the internal pressure sheath are at least partially bonded to one another. Most suitably, the permeation-barrier and the internal pressure sheath are at least partially bonded to one another using an adhesive. Alternatively, the permeation-barrier and the internal pressure sheath may be at least partially bonded to one another using a melt consolidation, or a melt bond, without adhesive.

Suitably, the permeation-barrier comprises a fluid impermeable material. Permeation of the undesirable fluids from the production fluids to the pipe annulus through transmission is thereby prevented.

Suitably, the permeation-barrier includes a metal and, preferably, wherein the metal includes stainless steel or an alloy comprising at least one of nickel, chromium, molybdenum, titanium, aluminium, zinc, copper, tin, or silver.

Suitably, the smoothing layer at least partially bridges from a first wrap of the permeation-barrier tape to a laterally adjacent second wrap of the permeation-barrier tape. More suitably, the smoothing layer encloses the connection element.

Suitably, the smoothing layer is configured to engage a permeation-barrier layer including a cross-sectional profile such that the smoothing layer deformably adapts to the cross-sectional profile to provide a receiving surface for receivingly engaging a helically wound metallic armour layer. Suitably, the smoothing layer deformably adapts to a recess of the cross-sectional profile. More suitably, the smoothing layer adapts by nesting in a recess of the cross-sectional profile.

In these ways, the smoothing layer accommodates an underlying layer with a range of cross-sectional profiles while providing a receiving surface for receiving a metallic armour layer. Preferably, the receiving surface is essentially cylindrical. The smoothing layer thereby easily receives the metallic armour layer, simplifying manufacture of the flexible pipe body. Friction and wear between the metallic armour layer and any uneven surface of the permeation-barrier layer or connection element is reduced or prevented, increasing the useful lifetime of the flexible pipe body.

Suitably, the smoothing layer is an extruded polymer layer, extruded as a tube around the underlying pipe body layer(s).

According to a further aspect of the invention, there is provided a flexible riser including a flexible pipe body as described herein.

According to a yet further aspect of the invention, there is provided a method of manufacturing a flexible pipe body for transporting production fluids, the method including
providing an internal pressure sheath;
providing a permeation-barrier layer;
providing a smoothing layer radially outward of the permeation-barrier layer; and
helically winding a metallic armour tape radially outward of the permeation barrier layer and the smoothing layer, such that the permeation-barrier layer and smoothing layer are disposed between the radially innermost layer of the flexible pipe body and the helically wound metallic armour layer.

The method includes a step of providing the permeation-barrier layer including helically winding a tape onto the flexible pipe body. The at least one helically wound tape of the permeation-barrier layer includes a body portion configured to lay around a circumference of the flexible pipe body and a first protrusion and a second protrusion opposed the first protrusion with the body portion therebetween. The permeation-barrier layer is wound such that the second protrusion of a first tape wrap is laterally adjacent to a first protrusion of a second tape wrap. Suitably, the method further includes a step of helically winding the tape onto the flexible pipe body at a first lay angle relative to an axis of the flexible pipe body in a range from greater than 20° to less than 87° and, yet more suitable, in a range from 50° to less than 80°.

Suitably, the step of helically winding a metallic armour tape radially outward of the smoothing layer further includes winding the metallic armour tape at a second lay angle relative to an axis of the flexible pipe body of at least 80°. More suitably, a difference between the first lay angle and the second lay angle is at least 15° and, yet more suitably, at least 30°.

Suitably, the smoothing layer is helically wound directly onto the permeation-barrier layer such that the smoothing layer at least partially bridges from a first wrap of the permeation-barrier layer to a laterally adjacent second wrap of the permeation-barrier layer. More suitably, the smoothing layer nests in a recess in the cross-sectional profile of at least one of the first wrap or the second wrap.

Suitably, the smoothing layer is an extruded. More suitably, the smoothing layer is an extruded polymer layer. Suitably, the extruded polymer of the smoothing layer comprises a polypropylene or another polyolefin, or a polyamide, or a polyvinyl chloride, or a fluoropolymer, or a TV resin, or thermoplastic elastomer.

The method further includes a step of providing a connection element configured to engage laterally adjacent first and second tape wraps of the permeation-barrier layer.

Unless otherwise explicitly stated all features of the invention are considered combinable with one another.

Certain embodiments of the invention provide the advantage that a flexible pipe body with reduced permeation of undesirable fluids to the pipe annulus may be provided. Permeation by transmission may be reduced. Permeation from leakage may be reduced. The resulting annulus environment may therefore be less severe than a conventional flexible pipe, which can result in increased pipe longevity.

Certain embodiments of the invention provide ensure the outer layers of pipe annulus experience lower temperatures during use. The corrosive effect of any fluid which permeates to the pipe annulus is thereby reduced. The useful lifetime of the flexible pipe body is increased.

### Brief Description of the Drawings

Embodiments of the invention are further described hereinafter with reference to the accompanying drawings, in which:
Fig. 1 illustrates a flexible pipe body;
Fig. 2 illustrates a riser system;
Fig. 3 illustrates a cross-sectional view of an example layer arrangement of a flexible pipe body;
Fig. 4 illustrates example composite tape layers wound around an internal pressure sheath with (a) a known example of lay angle and (b) an example lay angle according to the present invention;
Fig. 5 illustrates a cross-sectional view of a portion of another example layer arrangement of a flexible pipe body;
Fig. 6 illustrates schematic views of the permeation-barrier tape of the arrangement of Fig. 5 provided (a) on its own, and (b) with a sealing element and connection element;
Fig. 7 illustrates schematic views of a further example permeation-barrier tape of provided (a) on its own, and (b) with a sealing element and connection element;
Fig. 8 illustrates a cross-sectional view of another example layer arrangement of a flexible pipe body;
Fig. 9 illustrates a flow chart of a method of manufacturing a flexible pipe body;
Fig. 10 illustrates a cross-sectional view of a layer and corresponding sub-layers of an example arrangement of a flexible pipe body; and
Fig. 11 illustrates a top view of an example winding arrangement of the sub-layers of Fig. 10.

In the drawings like reference numerals refer to like parts.

### Detailed Description

Certain terminology is used in the following description for convenience only and is not limiting. The words 'lower' and 'upper' designate directions in the drawings to which reference is made and are with respect to the described component when assembled and mounted. The words 'inner', 'inwardly' and 'outer', 'outwardly' refer to directions toward and away from, respectively, a designated centreline or a geometric centre of an element being described (e.g. central axis), the particular meaning being readily apparent from the context of the description.

Further, unless otherwise specified, the use of ordinal adjectives, such as, 'first', 'second', 'third' etc. merely indicate that different instances of like objects are being referred to and are not intended to imply that the objects so described must be in a given sequence, either temporally, spatially, in ranking or in any other manner.

While some layers of the flexible pipe body may be described as bonded or consolidated the flexible pipe may generally be considered an unbonded flexible pipe. That is, unless otherwise specified the various layers of the flexible pipe body are unbonded and thereby have the capacity to move longitudinally in relation to the adjacent layers during the bending or flexion of the flexible pipe body.

As used herein, layers may optionally include sub-layers. A plurality of sub-layers cooperate to form a layer with a specific purpose. For example, a permeation-barrier layer may be formed of one or more sub-layers.

As used herein, a composite refers to a material that is formed from two or more different materials, for example a material formed from a matrix material and reinforcement fibres. In some examples, a composite may be a composite tape layer. In other examples a composite may include an extruded layer. Fibres within a composite material may include any of carbon fibres, or glass fibres, or basalt fibres, or tensilized polymer fibres, or metal wires, or any combination thereof. It will be understood that throughout this specification, reference is made to a tape and it will be understood that this term is to be broadly construed as encompassing any elongate structure having a preformed cross-sectional profile that can be wound in a helical manner around an underlying structure.

A tape refers to an elongate material provided in a wrapable or windable form, so as to form a helically wound tape by winding around a radially inward layer of the flexible pipe body. In an example, a tape is a metallic tape which is a wrapable or windable, such as the metallic material used to form a helically wound metallic tape. A tape typically includes a pair of mutually opposed longitudinal edges with a tape body therebetween.

As used herein the term lay angle refers to the angle at which a tape or layer is applied to, that is wound around, the flexible pipe body, relative to the longitudinal axis of the flexible pipe body. A tape with lay angle of 90° would be a tape wound around a radius of a cross-section of the flexible pipe body (i.e. perpendicular to the longitudinal axis of the pipe body).

It will be understood that the term radially is used to refer to a position in relation to the radius of the flexible pipe body. For example, the term radially inward is intended to refer to a position which is relatively closer to the centre, or central longitudinal axis, of the flexible pipe body and radially outward is intended to refer to a position which is relatively more distant from the centre, or central longitudinal axis, of the flexible pipe body.

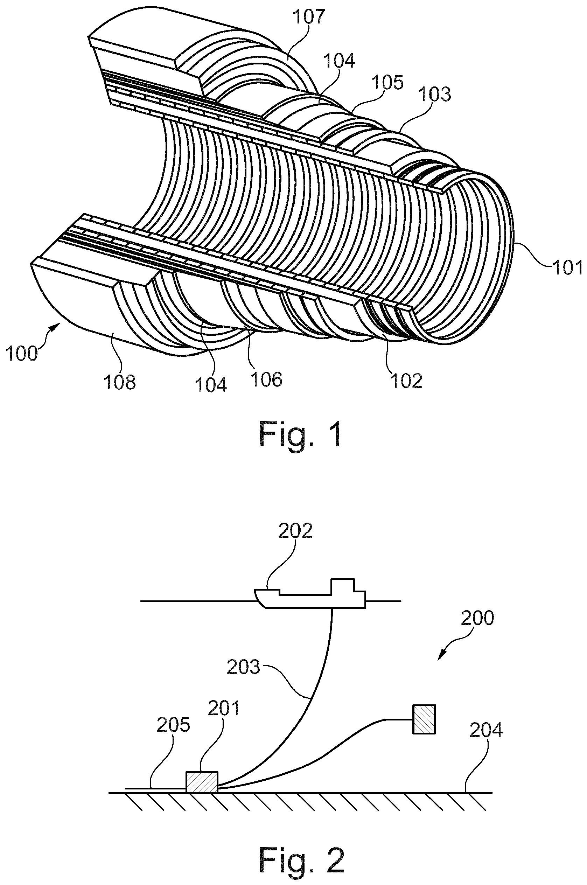

Referring now to Fig. 1, a traditional layer arrangement of flexible pipe body 100 is illustrated. In this example the flexible pipe body 100 includes an optional innermost carcass layer 101. The carcass layer 101 provides an interlocked construction that can be used as the innermost layer to prevent, totally or partially, collapse of an internal pressure sheath 102 due to pipe decompression, external pressure, and tensile armour pressure and mechanical crushing loads. The carcass layer 101 is often a metallic layer, formed from stainless steel, for example. The carcass layer 101 could also be formed from composite, polymer, or other material, or a combination of materials. It will be appreciated that certain embodiments are applicable to 'smooth bore' operations (i.e. without a carcass layer) as well as such 'rough bore' applications (with a carcass layer).

The internal pressure sheath 102 acts as a fluid retaining layer and includes a polymer layer that ensures internal fluid integrity. It is to be understood that this layer may itself comprise a number of sub-layers. It will be appreciated that when the optional carcass layer 101 is utilised the internal pressure sheath 102 is often referred to by those skilled in the art as a barrier layer. In operation without such a carcass layer 101 (so-called smooth bore operation) the internal pressure sheath 102 may be referred to as a liner.

An optional pressure armour layer 103 may be provided radial outward of the internal pressure sheath 102. The pressure armour layer 103 is a structural layer that increases the resistance of the flexible pipe to internal and external pressure and mechanical crushing loads. That is, the pressure armour layer 103 sustains radial loads. The pressure armour layer 103 provides hoop strength to the flexible pipe body 100. As will be appreciated, the pressure armour layer 103 is optional while without a pressure armour layer 103 the first and second tensile armour layers 105, 106 may also perform to withhold pressure as well as tension in the flexible pipe body 100.

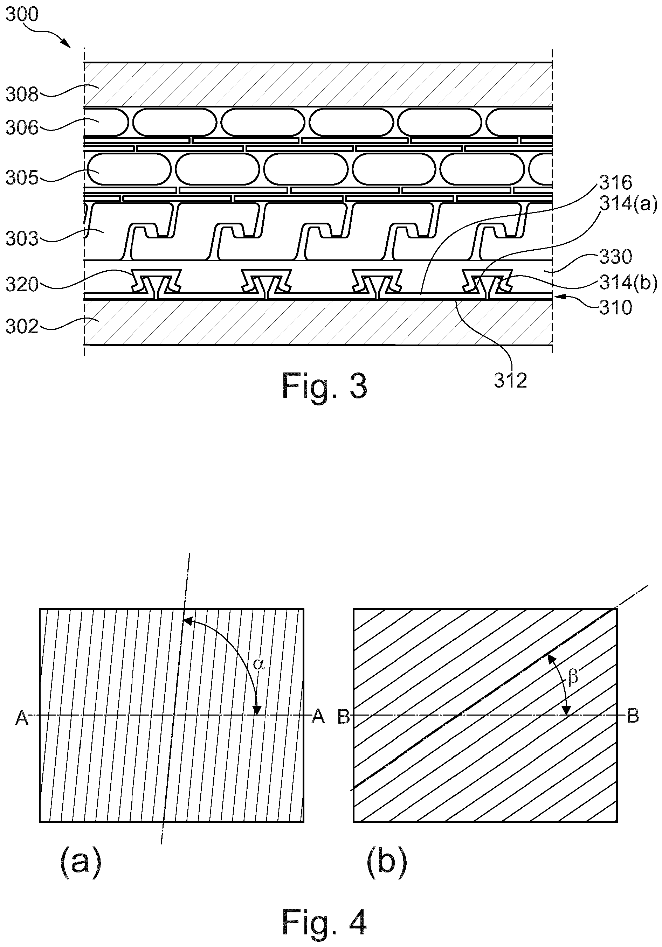

The optional pressure armour layer 103 also structurally supports the internal pressure sheath 102. Referring additionally to the illustration in Fig. 4(a), the pressure armour layer 103, when used, is formed from an interlocked construction of wires wound with a lay angle α relative to a flexible pipe body axis A-A. The lay angle α is typically close to 90°. In this way laterally adjacent interlocking wires provide a resilient pressure armour layer 103 that provides maximal hoop strength to the entire flexible pipe body 100.

The flexible pipe body 100 as shown includes sub-layers including a first tensile armour layer 105 and second tensile armour layer 106. Each tensile armour layer is used to sustain tensile loads and internal pressure. Further tensile armour layers may also optionally be added. Each tensile armour layer is formed from a plurality of wires (to impart strength to the layer) that are located over an inner layer and are helically wound along the length of the pipe at a lay angle typically between about 10° to 55°. The tensile armour layers are often counter-wound in pairs to balance torque in the pipe body. The tensile armour layers are often metallic layers, formed from carbon, or alloy steel, for example, but may be higher alloy or stainless steel, or may even be composite tendons.

The flexible pipe body 100 shown also includes optional tape layers 104 provided radially outward of the tensile armour layers 105, 106, which help contain underlying layers and extent prevent abrasion between adjacent layers.

The flexible pipe body 100 also typically includes optional layers of insulation 107 and an outer sheath 108, which includes a polymer layer used to protect the pipe against penetration of seawater and other external environments, corrosion, abrasion and mechanical damage.

Each flexible pipe 100 includes at least one portion, sometimes referred to as a segment or section of flexible pipe body 100 together with an end fitting located at at least one end of the flexible pipe. An end fitting provides a mechanical device which forms the transition between the flexible pipe body and a connector. The different pipe layers as shown, for example, in Fig. 1 are terminated in the end fitting in such a way as to transfer the load between the flexible pipe body and the connector.

Referring now to Fig. 2, there is shown a known riser assembly 200 suitable for transporting production fluid such as oil and/or gas and/or water from a sub-sea location 201 to a floating facility. For example, in Fig. 2 the sub-sea location 201 includes a sub-sea flow line. The flexible flow line 205 includes a flexible pipe 203, wholly or in part, resting on the sea floor 204 or buried below the sea floor and used in a static application. The floating facility may be provided by a platform and/or buoy or, as illustrated in Fig. 2, a ship 200. The riser assembly 200 is provided as a flexible riser, that is to say a flexible pipe 203 connecting the ship to the sea floor installation. The flexible pipe 203 may be in segments of flexible pipe body with connecting end fittings.

It will be appreciated that there are different types of riser, as is well-known by those skilled in the art. Embodiments may be used with any type of riser, such as a freely suspended (free, catenary riser), a riser restrained to some extent (buoys, chains), totally restrained riser or enclosed in a tube (I or J tubes). Fig. 2 also illustrates how portions of flexible pipe body can be utilised as a flow line 205 or jumper.

Referring now to Fig. 3, an example layer arrangement of a flexible pipe body 300 is shown in cross-section. In this example, the flexible pipe body 300 includes an internal pressure sheath 302. The internal pressure sheath 302 defines the flexible pipe bore. In some examples a carcass layer (not shown) may be provided radially inward of the internal pressure sheath 302 to define the pipe bore.

Tape layers (not numbered), tensile armour layers 305, 306 and an outer sheath 308 are provided in the radially outer portion of the flexible pipe body 300. These layers are described above with reference to Fig. 1 and so will not be described again for brevity. Although not illustrated one or more insulating layers, as is known in the art, may also be included in the flexible pipe body 300.

The flexible pipe body 300 includes a permeation-barrier layer 310 positioned radially inward of the metallic armour layer 303. In the example shown, the permeation-barrier layer 310 is provided between the internal pressure sheath 302 and the metallic armour layer 303. The internal pressure sheath 302 is positioned radially inwards of the permeation-barrier layer 310, however, the positions of these two layers could be reversed when a carcass layer forms the innermost layer of the pipe and a sacrificial or wear layer is provided over the carcass and underneath the permeation barrier layer.

The permeation-barrier layer 310 reduces fluid permeation through the flexible pipe body 300 by virtue of the features described herein.

In the example shown, the permeation-barrier layer 310 is a helically wound permeation-barrier tape. The helically wound permeation-barrier tape 312 is wrapped or wound around the internal pressure sheath 302 to form the permeation-barrier layer 310. Successive tape wraps of the permeation-barrier tape 312 are wound around the internal pressure sheath 302 to provide a series of laterally adjacent tape wraps.

The permeation-barrier tape 312 of the permeation-barrier layer 310 is helically wound with a lay angle relative to an axis of the flexible pipe body 300. Referring additionally, to Fig. 4(b), in the example shown, the permeation-barrier tape 312 is helically wound with a lay angle β relative to the axis B-B of the flexible pipe body 300. In the example shown the lay angle β is 40°. The lay angle therefore provides a reduced minimum bending radius of the permeation-barrier layer 310. Consequently, the lower minimum bending radius allows for greater flexibility of the flexible pipe body 300.

In the example shown, the permeation-barrier tape 312 is a metal thereby providing a fluid impermeable tape along the flexible pipe body 300.

The helically wound permeation-barrier tape 312 includes two surfaces as well as a first and second longitudinal edges. The first and second longitudinal edges are mutually opposed edges extending in the longitudinal direction of the helically wound permeation-barrier tape.

The permeation-barrier tape 312 has a cross-sectional profile including a first protrusion 314(a), and a second protrusion 314(b) opposed to the first protrusion 314(a). The cross-sectional profile also includes a body portion 316 extending between the first and second protrusions 314(a), 314(b).

In the example shown, the cross-sectional profile is substantially U-shaped such that each of the first protrusion 314(a) and the second protrusion 314(b) is angled above the plane of the body portion 316. The first protrusion 314(a) extends from the body portion 316 to the first longitudinal edge of the permeation barrier-tape 312. The second protrusion 314(b) extends from the body portion 316 to the second longitudinal edge of the permeation barrier-tape 312. The first protrusion 314(a) is disposed at angle to the body portion 316 such that the first longitudinal edge is spaced axially outward from the plane of the body portion 316. The second protrusion 314(b) is disposed at angle to the body portion 316 such that the second longitudinal edge is spaced axially outward from the plane of the body portion 316.

The cross-sectional profile of the permeation-barrier tape 312 extends in the longitudinal direction of the tape. In this way the U-shaped profile extends along the permeation-barrier tape 312. The body portion 316 is configured to lay around a circumference of the flexible pipe body. The body portion 316 is substantially flat. In this way, when the permeation-barrier tape 312 is helically wound onto the flexible pipe body 300, the body portion 316 is wrapped against the internal pressure sheath 302. The body portion 316 contactingly engages the internal pressure sheath 302.

The first protrusion 314(a) and second protrusion 314(b) of the cross-sectional profile each extend along the longitudinal direction of the permeation barrier tape 312. Both the first protrusion 314(a) and the second protrusion 314(b) are folded away from the body portion 316. In this way, when the permeation-barrier tape 312 is helically wound onto the flexible pipe body 300, the first protrusion 314(a) and the second protrusion 314(b) each extend radially outward from the body portion 316. The first protrusion 314(a) and the second protrusion 314(b) thereby extend towards the helically wound metallic armour layer 303.

When the permeation-barrier tape 312 is helically wound onto the internal pressure sheath 302, a first protrusion 314(a) of a first tape wrap is proximal to a second protrusion 314(b) of laterally adjacent second tape wrap. In the example shown, the first protrusion 314(a) of the first tape wrap abuts the second protrusion 314(b) of the laterally adjacent second tape wrap.

The flexible pipe body 300 includes a connection element 320 configured to engage laterally adjacent tape wraps of the helically wound tape 312. In particular, the connection element 320 encloses the first protrusion 314(a) of the first tape wrap 312 and the laterally adjacent second protrusion 314(b) of a second tape wrap.

The connection element 320 is formed as an elongate strip and arranged on the flexible pipe body 300 to the follow the pitch of the underlying helically wound tape 312. In this way, the connection element 320 is helically wound onto the flexible pipe body 300 so as to enclose the first longitudinal edge of the first tape wrap 312 and the laterally adjacent second longitudinal edge of a second tape wrap. Advantageously, the connection element 320, covers the adjacent longitudinal edges to provide a tortuous path between laterally adjacent tape wraps 312 for fluids, even when the pipe bends. Permeation of the undesirable fluids, particularly by leakage, from the production fluids to the pipe annulus through leakage is thereby prevented.

Suitably, the connection element is a clip with generally a C-shape cross section. Suitably, the connection element is a resilient material which resists separation of the first tape wrap and second tape wrap beyond what is required to enable the pipe body to be bent, but may allow a sliding displacement of the first tape wrap with respect to the second tape wrap in their length directions.

Suitably, the connection element comprises a metal (for instance stainless steel, or titanium, or nickel alloy or aluminium alloy), or a polymer (for instance a polyurethane, or a polycarbonate, or a polyamide, or a PVDF, or a PEEK or a PEKK, or a fluoropolymer, or a composite of any of the aforementioned polymers and comprising reinforcement fibres. Suitably, the connection element comprises the same material as the helically wound tape of the permeation-barrier layer.

The flexible pipe body 300 includes a smoothing layer 330. The smoothing layer 330 is disposed radially between the permeation-barrier layer 310 and the helically wound metallic armour layer 303. The smoothing layer 330 is engaged with the permeation-barrier layer 310 to provide a generally cylindrical surface for receivingly engaging the helically wound armour layer 303. The smoothing layer therefore smooths the outer surface of the permeation-barrier layer 310 for the armour layer 303 to be applied.

The smoothing layer 330 provides a sheath around the permeation-barrier layer 310 by adapting, particularly deformably adapting, to the cross-sectional profile of the underlying permeation-barrier tape 312. The smoothing layer 330 deformably adapts to the cross-sectional profile when applied to the permeation-barrier layer 310. In the example shown, the smoothing layer 330 deformably adapts to the U-shaped cross-sectional profile when extruded axially onto the permeation-barrier layer 310. Alternatively, the smoothing layer 330 may be provided as a smoothing tape which deformably adapts to the cross-sectional profile when helically wound onto the permeation-barrier layer 310.

Advantageously, the smoothing layer 330 provides a cylindrical surface for receiving the metallic armour layer 303. The smoothing layer 330 thereby easily receives the metallic armour layer 303, simplifying manufacture of the flexible pipe body.

Further, the smoothing layer 330 isolates both the underlying permeation-barrier layer 310 and the connection element 320 from the radially outward metallic armour layer 303.

The smoothing layer 330 bridges over respective first and second protrusions 314(a), 314(b) of laterally adjacent permeation-barrier tape wraps. The first protrusions 314(a) of a first tape wrap 312 and a second protrusion 314(b) of laterally adjacent tape wrap, as well as the associated connection element 320, are all enclosed by the smoothing layer 330.

Advantageously, permeation barrier layer tape helical windings 312, connection element helical windings 320 and smoothing layer helical windings 330 may all be applied to the pipe at the same time through a spiralling machine (such as is used to apply tensile armours to the flexible pipe body). The application angle in this case would be lower, as shown in Fig. 4b, and a plurality of permeation barrier tapes 312 would be applied around the flexible pipe body.

Alternatively, the permeation barrier layer tape helical windings, and connection element helical windings may be applied using a spiralling machine similar to that known for applying pressure armour tapes to flexible pipe body. The application angle in this case would be closer to 90°, as shown in Fig. 4a and just one or two permeation barrier tapes would be applied around the flexible pipe body. The smoothing layer 330 may then be applied as an extrusion over the permeation barrier layer 310 and connection element 320.

The flexible pipe body 300 includes a metallic armour layer 303. The metallic armour layer 303 is positioned radially outward of a permeation-barrier layer 310. Typically, the metallic armour layer is formed of carbon steel.

The metallic armour layer 303 includes one or more metallic armour tape. The metallic armour tapes are helically wrapped or wound around the smoothing layer 330 to form a helically wound metallic armour layer. The metallic armour tapes are helically wound onto the cylindrical surface of the smoothing layer 330. In particular, the metallic armour tapes are helically wound into the cylindrical surface of the smoothing layer 330. That is, the metallic armour tapes are wound so as to the provide metallic armour layer 303 with an internal diameter which is less than the external diameter of the smoothing layer 330. The metallic armour tapes thereby bite into the underlying smoothing layer 330.

The metallic armour layer in this example comprises a pressure armour tape 303 which has an interlocked construction (a Z-shaped profile). Each metallic armour wire includes opposing longitudinal edges 303a, 303b including mutually engaging features, as is known in the art. In this way, laterally adjacent tape wraps of the metallic armour layer 303 interlock in the region of overlap between laterally adjacent longitudinal edges. In this way, the metallic armour layer 303 predominantly provides the hoop strength for the flexible pipe body 300. The metallic armour layer 303 effectively sustains the radial loads on the flexible pipe body 300.

The metallic armour layer 303 is wound with a lay angle relative to a flexible pipe body axis of close to 90°, as is known in the art, and as indicated in Fig. 4a. In this way laterally adjacent interlocking wires provide a rigid pressure armour layer that provides maximal hoop strength to the entire flexible pipe body 300.

In use, a flexible pipe body 300 including the permeation-barrier layer 320 and smoothing layer 330 described above may be provided with suitable connectors to enable the flexible pipe body 300 to form a flexible pipe for transporting production fluid, such as described with reference to Fig. 2.

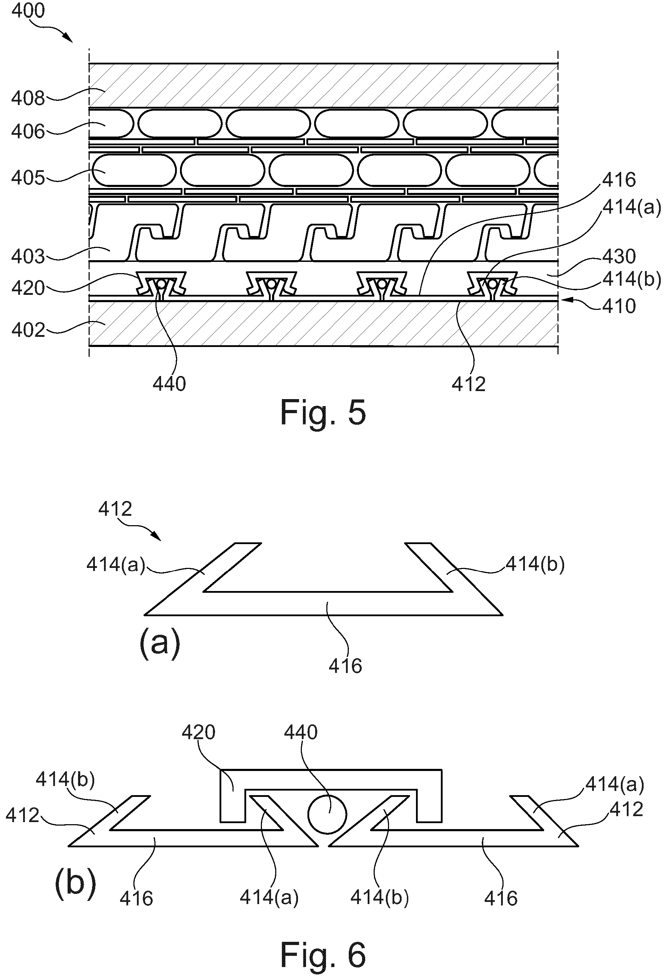

Referring now to Fig. 5 and Fig. 6, there are shown a further example layer arrangement of a flexible pipe body 400. The layer arrangement is substantially the same as the arrangement described with reference to Fig. 3, other than the flexible pipe body includes a sealing element 440.

The sealing element 440 is configured to coextend between a first protrusion 414(a) of a first tape wrap of the permeation barrier layer 410 and a second protrusion 414(b) of a laterally adjacent second tape wrap. In the example shown, the sealing element 440 is a helically wound sealing element 440. The sealing element 440 is wound around the permeation-barrier layer 410 to seal protrusions of laterally adjacent permeation-barrier tape wraps.

Suitably, the sealing element may comprise a polymer, or a rubber material, for instance a nitrile rubber, or a fluoroelastomer, or a polyurea or polyurethane or silicone material. Aptly, the sealing element 440 is deformable. In particular, the sealing element 440 is deformable towards the interstitial space between laterally adjacent tape wraps of the permeation barrier layer 410.

The flexible pipe body described with reference to Figs. 5 and 6 also includes a connection element 420 configured to engage laterally adjacent tape wraps of the helically wound tape 412 in the same manner as the example of Fig. 3. Thus, the connection element 420 encloses the sealing element 440 as well as the first protrusion 414(a) of the first tape wrap 412 and the laterally adjacent second protrusion 414(b) of a second tape wrap.

Advantageously, the connection element 420, provides a cover of the sealing element and adjacent longitudinal edges to provide a tortuous path ensure potential leakage pathways between laterally adjacent tape wraps 412 are blocked, even when the pipe bends.

Advantageously, the sealing element is attached or bonded to the connection element 420 by means of adhesive or through adhesion with a roughened the inner surface finish of the connection element. The roughened inner surface finish may achieved via the texture of the rolls or mould used to produce the connection element, or through surface treatment of the element (for instance grit blasting).

The flexible pipe body 400 includes a smoothing layer 430 of the same arrangement as the example described in reference to Fig. 3. The smoothing layer 430 is disposed radially between the permeation-barrier layer 410 and the helically wound metallic armour layer 403 to provide a cylindrical surface for receivingly engaging the helically wound armour layer 403. The smoothing layer 430 provides a sheath around the permeation-barrier layer 410 by adapting, to the cross-sectional profile of the underlying permeation-barrier tape 412. Friction and / or wear between the metallic armour layer 403 and any uneven surface of the permeation-barrier layer 410 or connection element 420 and is reduced or prevented, increasing the useful lifetime of the flexible pipe body.

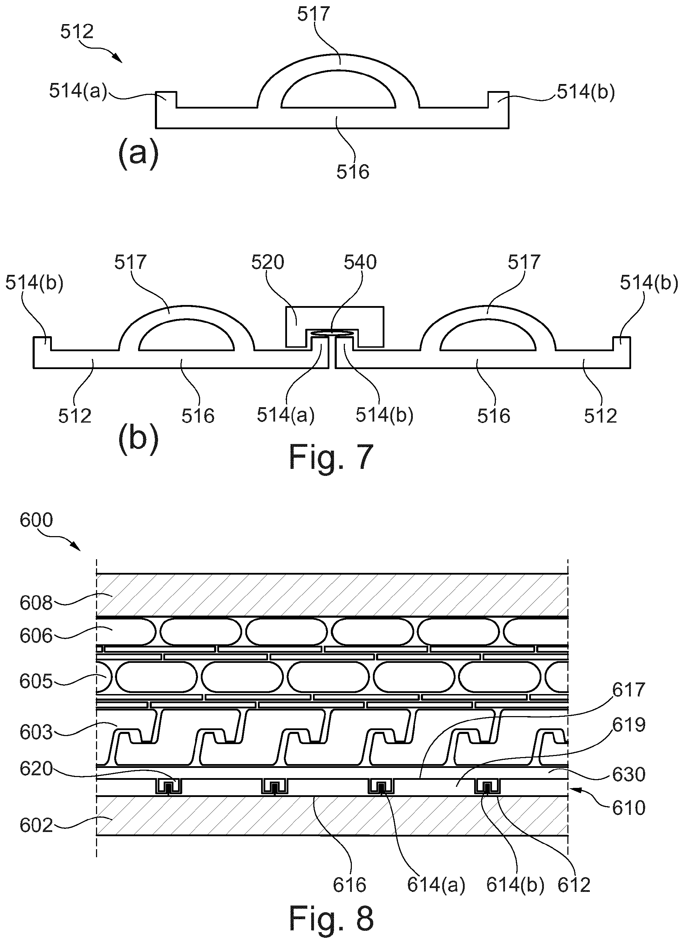

Referring now to Fig. 7, there are shown a further permeation tape 512 for use in a flexible pipe body, such as described herein. The layer arrangement is substantially the same as the arrangement described with reference to Fig. 5, other than the helically wound tape 512 of the permeation-barrier layer 510 includes a body portion 516 with a hollow structure 517.

The helically wound permeation-barrier tape 512 includes two surfaces as well as a first and second longitudinal edges. The first and second longitudinal edges are mutually opposed edges extending in the longitudinal direction of the helically wound permeation-barrier tape.

The permeation-barrier tape 512 has a cross-sectional profile including a first protrusion 514(a), and a second protrusion 514(b) opposed to the first protrusion 514(a). The cross-sectional profile also includes a body portion 516 extending between the first and second protrusions 514(a), 514(b). The body portion 516 includes the hollow structure 517, formed as an enclosed cavity in the cross-sectional profile. The hollow structure 517 encapsulates air or an insulating material, for instance aerogel.

In the example shown, the cross-sectional profile is such that each of the first protrusion 514(a) and the second protrusion 514(b) is angled above the plane of the body portion 516. The enclosed cavity of the hollow structure 517 is provided above the plane of the body portion 516.

The first protrusion 514(a) extends from the body portion 516 to the first longitudinal edge of the permeation barrier-tape 512. The second protrusion 514(b) extends from the body portion 516 to the second longitudinal edge of the permeation barrier-tape 512.

The cross-sectional profile of the permeation-barrier tape 512 extends in the longitudinal direction of the tape. In this way the cross-sectional profile extends along the permeation-barrier tape 512, such that the enclosed cavity of the hollow structure 517 is a longitudinal hollow structure 517.

The body portion 516 is configured to lay around a circumference of the flexible pipe body. In this way, when the permeation-barrier tape 512 is helically wound onto the flexible pipe body 500, the body portion 516 is wrapped against the internal pressure sheath 502 with the hollow structure 517 extending radially outward. The hollow structure 517 is thereby disposed circumferentially around the flexible pipe body.

Aptly, the permeation barrier tape 512 is produces as a single extruded material.

Aptly, the permeation barrier tape 512 is constructed from two parts: the body portion 516 of the tape (along with the protrusions 514), and the hollow structure 517, the two components being bonded together using roll bonding, or welding, or other suitable adhesive means.

When incorporated into a suitable flexible pipe body, air or insulation material in the hollow structure 517 provides thermal insulation in a similar manner to the insulation material described below with reference to Fig. 8.

The permeation tape 512 is provided with a connection element 520, sealing element 540 and a smoothing layer 530 so as to form a flexible pipe body. These layers are described above, and so will not be described again for brevity.

Referring now to Fig. 8, there is shown a further example layer arrangement of a flexible pipe body 600. The permeation tape 612 is substantially the same as the permeation tape 512 described with reference to the Fig. 7, other than the hollow structure 617 encapsulates a rectangular section of insulation material 619.

By providing a hollow structure which encapsulates air or an insulation material, the permeation tape layer provides thermal insulation of the radially outward layers from the typically higher temperatures of the production fluids. The outer layers of pipe annulus experience lower temperatures during use, which also reduces corrosion effects on metallic armour layer tapes.

The permeation tape 612 is used to form a flexible pipe body by winding onto an internal pressure sheath and providing a suitable connection element 620 and smoothing layer 630, disposed radially outward of the permeation-barrier layer 610. These layers are described above with reference to Figs. 3 and 5, and so will not be described again for brevity.

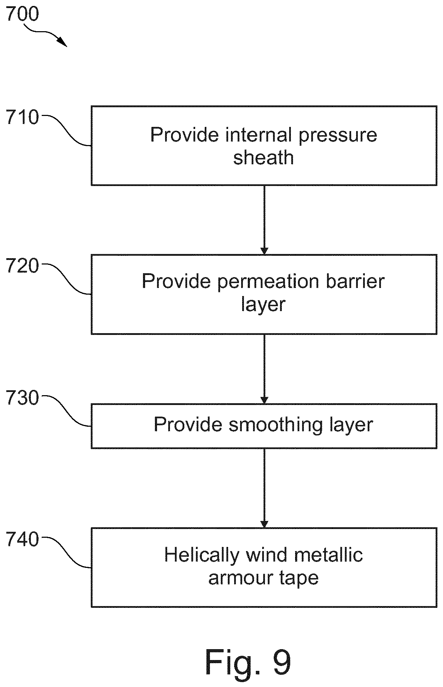

Referring now to Fig. 9, there is shown a flow chart of a method 700 of manufacturing a flexible pipe body, such as one of those described herein. The method may be carried out using any suitable choice of operation such as mechanically or manually winding the layers.

In a first step 710 an internal pressure sheath for the flexible pipe body is provided. The internal pressure sheath is formed by an extrusion process as is known in the art.

In a second step 720 a permeation-barrier layer is provided. The method 700 provides a permeation-barrier layer, formed from a helically wound permeation-barrier tape, provided radially outward of the internal pressure sheath. The helically wound tape is wrapped or wound around the internal pressure sheath to form the permeation-barrier layer. Successive tape wraps of the helically wound tape are wound around the internal pressure sheath to provide a series of laterally adjacent tape wraps.

In a third step 730 a smoothing layer is provided. The method 700 provides a smoothing layer radially outward of the internal pressure sheath. The method 700 thereby provides a sheath around the permeation-barrier layer by adapting, particularly deformably adapting, to the cross-sectional profile of the underlying permeation-barrier tape. The method 700 ensures that a cylindrical surface is provided for receivingly engaging an armour layer.

The method axially extrudes the smoothing layer onto the permeation-barrier layer. The smoothing layer deformably adapts to the cross-sectional profile as it is extruded. Alternatively, the method may provide a smoothing layer by helically winding a smoothing tape onto the permeation-barrier layer so as to deformably adapt to the cross-sectional profile when helically wound.

Advantageously, the smoothing layer isolates both the underlying permeation-barrier layer and the connection element from the radially outward metallic armour layer
The smoothing layer is provided over respective first and second protrusions of laterally adjacent permeation-barrier tape wraps. The smoothing layer encloses at least the first protrusions of a first tape wrap, the second protrusion of laterally adjacent second tape wrap, and the associated connection element.

In a fourth step 740 a metallic armour tape is helically wound to provide an armour layer. The helically wound armour layer is provided radially outward of the smoothing layer such that the smoothing layer is positioned between the permeation-barrier layer and the helically wound armour layer.

In the fourth step 740, the metallic armour tapes are helically wound onto the cylindrical surface of the smoothing layer. That is, the metallic armour tapes are wound so as to provide a metallic armour layer with an internal diameter which is less than the external diameter of the smoothing layer. This helps to ensure that the metallic armour tapes bite into the underlying smoothing layer.

Various modifications to the detailed arrangements as described above are possible.

A permeation-barrier layer may have an interlocked construction (for example, a Z-shaped profile). The permeation-barrier tape may include opposing protrusions with mutually engaging features. In this way, a first protrusion of a first tape wrap may interlock with a second protrusion of laterally adjacent second tape wrap. An interlock region is thereby provided in the region of overlap between laterally adjacent protrusions so as to provide a tortuous path which ensure potential leakage pathways between laterally adjacent tape wraps are blocked, even when the pipe bends.

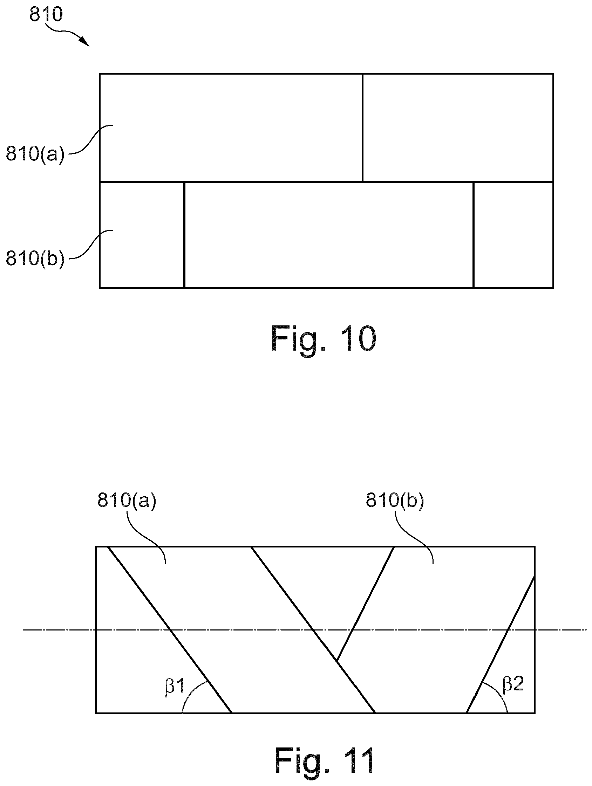

The permeation-barrier layer of a flexible pipe body described herein may include more than one helically wound tape. For example, the layer may include two helically wound permeation-barrier tapes. The two permeation-barrier tapes may be disposed radially adjacent to one another. Referring additionally to Figs. 10 and 11, there are shown close-up views of a permeation-barrier layer 810 including a first permeation-barrier tape 810a a second permeation-barrier tape 810b. The first sub-layer 810a is provided radially outward of the second sub-layer 810b.

The first permeation-barrier tape 810a forms a first sub-layer of the permeation-barrier layer 810 and the second permeation-barrier tape 810b forms a second sub-layer of the permeation-barrier layer 810. In the example shown, the first sub-layer is consolidated with the second sub-layer. In this way the sub-layers are substantially bonded together to form a single composite permeation-barrier layer 810. The sub-layers thereby function collectively as a permeation-barrier layer 810, as is described herein.

The first permeation-barrier tape 810a and the second permeation-barrier tape 810b each have the properties of the permeation-barrier layer as described herein. One or more properties of the first permeation-barrier tape 810a may be different to one or more corresponding property of the permeation-barrier tape 810b.

The first sub-layer 810a is wound at a first lay angle β1 to the axis of the flexible pipe body. The second sub-layer 810b is counter wound at a second lay angle β2 to the axis of the flexible pipe body. In this way permeation of fluids through the composite tape layer 810 is reduced by removing gaps, or discontinuities, between successive wraps of composite tape sub-layers 810a, 810b that may otherwise provide leakage pathways.

By forming the permeation-barrier layer 810 from two sub-layers 810a, 810b a greater number of options for design and manufacture of the flexible pipe body is provided. The consolidation of sub-layers provides the ability to adapt the permeation-barrier layer 810 according to the specific permeation requirements of the production fluids contained within the flexible pipe body. For example, a first sub-layer may preferentially block permeation, that is transmission, of a first production fluid, and a second sub-layer may preferentially block permeation, that is transmission, of a second production fluid.

Certain examples provide the advantage that a flexible pipe body with reduced permeation of undesirable fluids into the pipe annulus may be provided. Permeation by transmission is particularly reduced. Certain examples provide a tortuous path to inhibit permeation of undesirable fluids. In each way, the resulting annulus environment may therefore be less severe than a conventional flexible pipe, which can result in increased pipe longevity. Certain examples provide the advantage that relative movement between the layers is substantially restricted. Friction or wear caused by relative movement between a metallic armour layer and a smoothing layer during use may be substantially restricted. Friction or wear of an uneven surface of a permeation-barrier layer or a connection element against a radially outward layer, such as a metallic armour layer, and is inhibited. The useful lifetime of the flexible pipe body is thereby increased.

## Claims

1. A flexible pipe body (300; 400; 500; 600) for transporting production fluids, the flexible pipe body comprising:
an internal pressure sheath (302; 402; 502; 602);
a helically wound metallic armour layer (303; 403; 503; 603) radially outward of the internal pressure sheath;
a permeation-barrier layer (310; 410; 510; 610) disposed radially inside the helically wound metallic armour layer; and
a smoothing layer (330; 430; 530; 630) disposed radially between the permeation-barrier layer and the helically wound metallic armour layer,
wherein the permeation-barrier layer comprises at least one helically wound tape (312; 412; 512; 612),
wherein the at least one helically wound tape (312; 412; 512; 612) of the permeation-barrier layer (310; 410; 510; 610) comprises:
a body portion (316; 416; 516; 616) configured to lay around a circumference of the flexible pipe body; and
a first protrusion (314(a); 414(a); 514(a); 614(a)) and a second protrusion (314(b); 414(b); 514(b); 614(b)) opposed the first protrusion with the body portion therebetween, and
wherein the permeation-barrier layer is wound such that the second protrusion of a first tape wrap is laterally adjacent to a first protrusion of a second tape wrap,
**characterized in that** the flexible pipe body further comprises a connection element (320; 420; 520; 620) configured to engage both the second protrusion of the first tape wrap and the laterally adjacent first protrusion of a second tape wrap.

2. The flexible pipe body (300; 400; 500; 600) according to claim 1, wherein the helically wound tape (312; 412; 512; 612) comprises a lay angle relative to an axis of the flexible pipe body in a range from greater than 20° to less than 87° and, preferably, in a range from 50° to less than 80°, and optionally
wherein the helically wound tape (312; 412; 512; 612) comprises one or more of a polymeric material, a metallic material, a metal containing composition or a combination thereof.

3. The flexible pipe body (300; 400; 500; 600) according to any previous claim, wherein the helically wound metallic armour layer (303; 403; 503; 603) comprises at least one helically wound metallic tape having a first longitudinal edge (303a) and a second longitudinal edge (303b), and further comprises a region of overlap coextending with the first longitudinal edge of a first tape wrap of the helically wound metallic tape and the second longitudinal edge of a second tape wrap, and/or
wherein the helically wound metallic armour layer (303; 403; 503; 603) comprises a helically wound metallic tape with a lay angle relative to an axis of the flexible pipe body of at least 80°.

4. The flexible pipe body (300; 400; 500; 600) according to any preceding claim, wherein the body portion (316; 416; 516; 616) of the at least one helically wound tape (312; 412; 512; 612) comprises an at least partially hollow structure (517; 617), and optionally
wherein the at least partially hollow structure (517; 617) encapsulates an insulation material (619).

5. The flexible pipe body (300; 400; 500; 600) according to any preceding claim, wherein the connection element (320; 420; 520; 620) is a strip or tape.

6. The flexible pipe body (300; 400; 500; 600) according to any preceding claim, further comprising a sealing element (440; 540) configured to coextend between the first protrusion (314(a); 414(a); 514(a); 614(a)) of the first wrap and the laterally adjacent second protrusion (314(b); 414(b); 514(b); 614(b)) of the second wrap.

7. The flexible pipe body (300; 400; 500; 600) according to any preceding claim, wherein the permeation-barrier layer (310; 410; 510; 610) and the internal pressure sheath (302; 402; 502; 602) are at least partially bonded to one another, and optionally
wherein the permeation-barrier layer (310; 410; 510; 610) comprises a metal and, preferably, wherein the metal comprises stainless steel or an alloy comprising at least one of nickel, titanium, aluminium, zinc, copper, tin, or silver.

8. The flexible pipe body (300; 400; 500; 600) according to any preceding claim, wherein the permeation-barrier layer (310; 410; 510; 610) comprises a fluid impermeable material.

9. The flexible pipe body (300; 400; 500; 600) according to any preceding claim, wherein the smoothing layer (330; 430; 530; 630) is configured to engage a permeation-barrier layer (310; 410; 510; 610) including a cross-sectional profile such that the smoothing layer deformably adapts to the cross-sectional profile to provide to provide a receiving surface for receivingly engaging the helically wound metallic armour layer (303; 403; 503; 603), and optionally:
a) wherein the smoothing layer (330; 430; 530; 630) at least partially bridges from a first wrap of the permeation-barrier tape (312; 412; 512; 612) to a laterally adjacent second wrap of the permeation-barrier tape, and/or
b) wherein the smoothing layer (330; 430; 530; 630) deformably adapts to a recess of the cross-sectional profile and, preferably, nests in a recess of the cross-sectional profile, and/or
c) wherein the receiving surface is a cylindrical surface.

10. The flexible pipe body (300; 400; 500; 600) according to any preceding claim, wherein the smoothing layer (330; 430; 530; 630) is an extruded polymer layer.

11. A flexible riser comprising the flexible pipe body (300; 400; 500; 600) of any preceding claim.

12. A method of manufacturing a flexible pipe body (300; 400; 500; 600) for body for transporting production fluids, the method comprising:
providing an internal pressure sheath (302; 402; 502; 602);
providing a permeation-barrier layer (310; 410; 510; 610);
providing a smoothing layer (330; 430; 530; 630) radially outward of the permeation-barrier layer; and
helically winding a metallic armour tape radially outward of the permeation barrier layer and the smoothing layer, such that the permeation-barrier layer and smoothing layer are disposed between the radially inner-most layer of the flexible pipe body and helically wound metallic armour layer (303; 403; 503; 603),
wherein the step of providing the permeation-barrier layer comprises helically winding at least one tape (312; 412; 512; 612) onto the flexible pipe body,
wherein the at least one helically wound tape (312; 412; 512; 612) of the permeation-barrier layer (310; 410; 510; 610) comprises:
a body portion (316; 416; 516; 616) configured to lay around a circumference of the flexible pipe body; and
a first protrusion (314(a); 414(a); 514(a); 614(a)) and a second protrusion (314(b); 414(b); 514(b); 614(b)) opposed the first protrusion with the body portion therebetween, and
wherein the permeation-barrier layer is wound such that the second protrusion of a first tape wrap is laterally adjacent to a first protrusion of a second tape wrap,
**characterized in that** the method further comprises providing a connection element (320; 420; 520; 620) configured to engage both the second protrusion of the first tape wrap and the laterally adjacent first protrusion of a second tape wrap.

13. The method according to claim 12, wherein:
a) the tape (312; 412; 512; 612) is helically wound onto the flexible pipe body (300; 400; 500; 600) at a first lay angle relative to an axis of the flexible pipe body in a range from greater than 20° to less than 87° and, preferably, in a range from 50° to less than 80°, and/or
b) the step of helically winding a metallic armour tape radially outward of the smoothing layer (330; 430; 530; 630) further comprises winding the metallic armour tape onto the flexible pipe body (300; 400; 500; 600) at a second lay angle relative to an axis of the flexible pipe body of at least 80°, and optionally wherein a difference between the first lay angle and the second lay angle is at least 15° and, preferably, at least 30°, and/or
c) the smoothing layer (330; 430; 530; 630) is helically wound directly onto the permeation-barrier layer (310; 410; 510; 610) such that the smoothing layer at least partially bridges from a first wrap of the permeation-barrier layer to a laterally adjacent second wrap of the permeation-barrier layer, and, optionally, wherein the smoothing layer nests in a recess of a cross-sectional profile of at least one of the first wrap or the second wrap, and optionally wherein the smoothing layer (330; 430; 530; 630) is an extruded polymer layer.

## Patentansprüche

1. Flexibler Rohrkörper (300; 400; 500; 600) zum Transportieren von Förderfluiden, der flexible Rohrkörper umfassend:
eine Innendruckhülle (302; 402; 502; 602);
eine schraubenförmig gewickelte metallische Bewehrungsschicht (303; 403; 503; 603) radial außerhalb der Innendruckhülle;
eine Permeationsbarriereschicht (310; 410; 510; 610), die radial innerhalb der schraubenförmig gewickelten metallischen Bewehrungsschicht angeordnet ist; und
eine Glättungsschicht (330; 430; 530; 630), die radial zwischen der Permeationsbarriereschicht und der schraubenförmig gewickelten metallischen Bewehrungsschicht angeordnet ist,
wobei die Permeationsbarriereschicht mindestens ein schraubenförmig gewickeltes Band (312; 412; 512; 612) umfasst,
wobei das mindestens eine schraubenförmig gewickelte Band (312; 412; 512; 612) der Permeationsbarriereschicht (310; 410; 510; 610) umfasst:
einen Körperabschnitt (316; 416; 516; 616), der konfiguriert ist, um sich um einen Umfang des flexiblen Rohrkörpers zu legen; und
einen ersten Vorsprung (314(a); 414(a); 514(a); 614(a)) und einen zweiten Vorsprung (314(b); 414(b); 514(b); 614(b)), der dem ersten Vorsprung mit dem Körperabschnitt dazwischen gegenüberliegt, und
wobei die Permeationsbarriereschicht derart gewickelt ist, dass der zweite Vorsprung einer ersten Bandwicklung seitlich benachbart zu einem ersten Vorsprung einer zweiten Bandwicklung ist,
**dadurch gekennzeichnet, dass** der flexible Rohrkörper ferner ein Verbindungselement (320; 420; 520; 620) umfasst, das konfiguriert ist, um sowohl den zweiten Vorsprung der ersten Bandwicklung als auch den seitlich benachbarten ersten Vorsprung einer zweiten Bandwicklung in Eingriff zu nehmen.

2. Flexibler Rohrkörper (300; 400; 500; 600) nach Anspruch 1, wobei das schraubenförmig gewickelte Band (312; 412; 512; 612) einen Schlagwinkel relativ zu einer Achse des flexiblen Rohrkörpers in einem Bereich von mehr als 20° bis weniger als 87° und vorzugsweise in einem Bereich von 50° bis weniger als 80° umfasst, und optional
wobei das schraubenförmig gewickelte Band (312; 412; 512; 612) eines oder mehrere von einem Polymermaterial, einem metallischen Material, einer metallhaltigen Zusammensetzung oder einer Kombination davon umfasst.

3. Flexibler Rohrkörper (300; 400; 500; 600) nach einem vorstehenden Anspruch, wobei die schraubenförmig gewickelte metallische Bewehrungsschicht (303; 403; 503; 603) mindestens ein schraubenförmig gewickeltes metallisches Band umfasst, das eine erste Längskante (303a) und eine zweite Längskante (303b) aufweist, und ferner einen Überlappungsbereich umfasst, der sich gemeinsam mit der ersten Längskante einer ersten Bandwicklung des schraubenförmig gewickelten metallischen Bandes und der zweiten Längskante einer zweiten Bandwicklung erstreckt, und/oder
wobei die schraubenförmig gewickelte metallische Bewehrungsschicht (303; 403; 503; 603) ein schraubenförmig gewickeltes metallisches Band mit einem Schlagwinkel relativ zu einer Achse des flexiblen Rohrkörpers von mindestens 80° umfasst.

4. Flexibler Rohrkörper (300; 400; 500; 600) nach einem der vorstehenden Ansprüche, wobei der Körperabschnitt (316; 416; 516; 616) des mindestens einen schraubenförmig gewickelten Bandes (312; 412; 512; 612) eine mindestens teilweise hohle Struktur (517; 617) umfasst, und optional
wobei die mindestens teilweise hohle Struktur (517; 617) ein Isoliermaterial (619) einkapselt.

5. Flexibler Rohrkörper (300; 400; 500; 600) nach einem der vorstehenden Ansprüche, wobei das Verbindungselement (320; 420; 520; 620) ein Streifen oder ein Band ist.

6. Flexibler Rohrkörper (300; 400; 500; 600) nach einem der vorstehenden Ansprüche, ferner umfassend ein Dichtungselement (440; 540), das konfiguriert ist, um sich zwischen dem ersten Vorsprung (314(a); 414(a); 514(a); 614(a)) der ersten Wicklung und dem seitlich benachbarten zweiten Vorsprung (314(b); 414(b); 514(b); 614(b)) der zweiten Wicklung gemeinsam zu erstrecken.

7. Flexibler Rohrkörper (300; 400; 500; 600) nach einem der vorstehenden Ansprüche, wobei die Permeationsbarriereschicht (310; 410; 510; 610) und die Innendruckhülle (302; 402; 502; 602) mindestens teilweise aneinander gebunden sind, und optional
wobei die Permeationsbarriereschicht (310; 410; 510; 610) ein Metall umfasst und vorzugsweise wobei das Metall Edelstahl oder eine Legierung umfasst, umfassend mindestens eines von Nickel, Titan, Aluminium, Zink, Kupfer, Zinn oder Silber.

8. Flexibler Rohrkörper (300; 400; 500; 600) nach einem der vorstehenden Ansprüche, wobei die Permeationsbarriereschicht (310; 410; 510; 610) ein fluidundurchlässiges Material umfasst.

9. Flexibler Rohrkörper (300; 400; 500; 600) nach einem der vorstehenden Ansprüche, wobei die Glättungsschicht (330; 430; 530; 630) konfiguriert ist, um eine Permeationsbarriereschicht (310; 410; 510; 610) in Eingriff zu nehmen, die ein Querschnittsprofil derart einschließt, dass sich die Glättungsschicht verformbar an das Querschnittsprofil anpasst, um eine Aufnahmeoberfläche zum aufnehmenden Ineingriffnehmen der schraubenförmig gewickelten metallischen Bewehrungsschicht (303; 403; 503; 603) bereitzustellen, und optional:
a) wobei die Glättungsschicht (330; 430; 530; 630) mindestens teilweise von einer ersten Wicklung des Permeationsbarrierebandes (312; 412; 512; 612) zu einer seitlich benachbarten zweiten Wicklung des Permeationsbarrierebandes überbrückt, und/oder
b) wobei sich die Glättungsschicht (330; 430; 530; 630) verformbar an eine Aussparung des Querschnittsprofils anpasst und sich vorzugsweise in eine Aussparung des Querschnittsprofils einbettet, und/oder
c) wobei die Aufnahmeoberfläche eine zylindrische Oberfläche ist.

10. Flexibler Rohrkörper (300; 400; 500; 600) nach einem der vorstehenden Ansprüche, wobei die Glättungsschicht (330; 430; 530; 630) eine extrudierte Polymerschicht ist.

11. Flexibles Steigrohr, umfassend den flexiblen Rohrkörper (300; 400; 500; 600) nach einem der vorstehenden Ansprüche.

12. Verfahren zum Herstellen eines flexiblen Rohrkörpers (300; 400; 500; 600) für einen Körper zum Transportieren von Förderfluiden, das Verfahren umfassend:
Bereitstellen einer Innendruckhülle (302; 402; 502; 602);
Bereitstellen einer Permeationsbarriereschicht (310; 410; 510; 610);
Bereitstellen einer Glättungsschicht (330; 430; 530; 630) radial außerhalb der Permeationsbarriereschicht; und
schraubenförmiges Wickeln eines metallischen Bewehrungsbandes radial außerhalb der Permeationsbarriereschicht und der Glättungsschicht derart, dass die Permeationsbarriereschicht und die Glättungsschicht zwischen der radial innersten Schicht des flexiblen Rohrkörpers und der schraubenförmig gewickelten metallischen Bewehrungsschicht (303; 403; 503; 603) angeordnet sind,
wobei der Schritt des Bereitstellens der Permeationsbarriereschicht das schraubenförmige Wickeln von mindestens einem Band (312; 412; 512; 612) auf den flexiblen Rohrkörper umfasst,
wobei das mindestens eine schraubenförmig gewickelte Band (312; 412; 512; 612) der Permeationsbarriereschicht (310; 410; 510; 610) umfasst:
einen Körperabschnitt (316; 416; 516; 616), der konfiguriert ist, um sich um einen Umfang des flexiblen Rohrkörpers zu legen; und
einen ersten Vorsprung (314(a); 414(a); 514(a); 614(a)) und einen zweiten Vorsprung (314(b); 414(b); 514(b); 614(b)), der dem ersten Vorsprung mit dem Körperabschnitt dazwischen gegenüberliegt, und
wobei die Permeationsbarriereschicht derart gewickelt ist, dass der zweite Vorsprung einer ersten Bandwicklung seitlich benachbart zu einem ersten Vorsprung einer zweiten Bandwicklung ist,
**dadurch gekennzeichnet, dass** das Verfahren ferner das Bereitstellen eines Verbindungselements (320; 420; 520; 620) umfasst, das konfiguriert ist, um sowohl den zweiten Vorsprung der ersten Bandwicklung als auch den seitlich benachbarten ersten Vorsprung einer zweiten Bandwicklung in Eingriff zu nehmen.

13. Verfahren nach Anspruch 12, wobei:
a) das Band (312; 412; 512; 612) schraubenförmig auf den flexiblen Rohrkörper (300; 400; 500; 600) unter einem ersten Schlagwinkel relativ zu einer Achse des flexiblen Rohrkörpers in einem Bereich von mehr als 20° bis weniger als 87° und vorzugsweise in einem Bereich von 50° bis weniger als 80° gewickelt ist, und/oder
b) der Schritt des schraubenförmigen Wickelns eines metallischen Bewehrungsbandes radial auswärts der Glättungsschicht (330; 430; 530; 630) ferner das Wickeln des metallischen Bewehrungsbandes auf den flexiblen Rohrkörper (300; 400; 500; 600) in einem zweiten Schlagwinkel relativ zu einer Achse des flexiblen Rohrkörpers von mindestens 80° umfasst, und optional wobei eine Differenz zwischen dem ersten Schlagwinkel und dem zweiten Schlagwinkel mindestens 15° und vorzugsweise mindestens 30° beträgt, und/oder
c) die Glättungsschicht (330; 430; 530; 630) schraubenförmig direkt auf die Permeationsbarriereschicht (310; 410; 510; 610) derart gewickelt ist, dass die Glättungsschicht mindestens teilweise von einer ersten Wicklung der Permeationsbarriereschicht zu einer seitlich benachbarten zweiten Wicklung der Permeationsbarriereschicht überbrückt, und, optional, wobei die Glättungsschicht in einer Aussparung eines Querschnittsprofils von mindestens einer der ersten Wicklung oder der zweiten Wicklung eingebettet ist, und optional wobei die Glättungsschicht (330; 430; 530; 630) eine extrudierte Polymerschicht ist.

## Revendications

1. Corps de tuyau flexible (300 ; 400 ; 500 ; 600) destiné à transporter des fluides de production, le corps de tuyau flexible comprenant :
une gaine de pression interne (302 ; 402 ; 502 ; 602) ;
une couche d'armure métallique enroulée en hélice (303 ; 403 ; 503 ; 603) radialement à l'extérieur de la gaine de pression interne ;
une couche de barrière à la perméation (310 ; 410 ; 510 ; 610) disposée radialement à l'intérieur de la couche d'armure métallique enroulée en hélice ; et
une couche de lissage (330 ; 430 ; 530 ; 630) disposée radialement entre la couche de barrière à la perméation et la couche d'armure métallique enroulée en hélice,
dans lequel la couche de barrière à la perméation comprend au moins un ruban enroulé en hélice (312 ; 412 ; 512 ; 612),
dans lequel le ou les rubans enroulés en hélice (312 ; 412 ; 512 ; 612) de la couche de barrière à la perméation (310 ; 410 ; 510 ; 610) comprennent :
une partie corps (316 ; 416 ; 516 ; 616) conçue pour s'étendre autour d'une circonférence du corps de tuyau flexible ; et
une première saillie (314(a) ; 414(a) ; 514(a) ; 614(a)) et une deuxième saillie (314(b) ; 414(b) ; 514(b) ; 614(b)) en regard de la première saillie avec la partie de corps entre elles, et
dans lequel la couche de barrière à la perméation est enroulée de telle sorte que la deuxième saillie d'un premier enroulement de ruban est latéralement adjacente à une première saillie d'un deuxième enroulement de ruban,
**caractérisé en ce que** le corps de tuyau flexible comprend en outre un élément de liaison (320 ; 420 ; 520 ; 620) conçu pour venir en prise à la fois avec la deuxième saillie du premier enroulement de ruban et la première saillie latéralement adjacente d'un deuxième enroulement de ruban.

2. Corps de tuyau flexible (300 ; 400 ; 500 ; 600) selon la revendication 1, dans lequel le ruban enroulé en hélice (312 ; 412 ; 512 ; 612) comprend un angle de pose par rapport à un axe du corps de tuyau flexible dans une plage allant de plus de 20° à moins de 87° et, de préférence, dans une plage allant de 50° à moins de 80°, et éventuellement
dans lequel le ruban enroulé en hélice (312 ; 412 ; 512 ; 612) comprend un ou plusieurs éléments parmi un matériau polymère, un matériau métallique, une composition contenant un métal ou une combinaison de ceux-ci.

3. Corps de tuyau flexible (300 ; 400 ; 500 ; 600) selon l'une quelconque des revendications précédentes, dans lequel la couche d'armure métallique enroulée en hélice (303 ; 403 ; 503 ; 603) comprend au moins un ruban métallique enroulé en hélice ayant un premier bord longitudinal (303a) et un deuxième bord longitudinal (303b), et comprend en outre une région de chevauchement s'étendant conjointement avec le premier bord longitudinal d'un premier enroulement de ruban du ruban métallique enroulé en hélice et le deuxième bord longitudinal d'un deuxième enroulement de ruban, et/ou
dans laquelle la couche d'armure métallique enroulée en hélice (303 ; 403 ; 503 ; 603) comprend un ruban métallique enroulé en hélice avec un angle de pose par rapport à un axe du corps de tuyau flexible d'au moins 80°.

4. Corps de tuyau flexible (300 ; 400 ; 500 ; 600) selon l'une quelconque des revendications précédentes, dans lequel la partie corps (316 ; 416 ; 516 ; 616) du ou des rubans enroulés en hélice (312 ; 412 ; 512 ; 612) comprend une structure au moins partiellement creuse (517 ; 617), et éventuellement
dans lequel la structure au moins partiellement creuse (517 ; 617) encapsule un matériau isolant (619).

5. Corps de tuyau flexible (300 ; 400 ; 500 ; 600) selon l'une quelconque des revendications précédentes, dans lequel l'élément de liaison (320 ; 420 ; 520 ; 620) est une bande ou un ruban.

6. Corps de tuyau flexible (300 ; 400 ; 500 ; 600) selon l'une quelconque des revendications précédentes, comprenant en outre un élément d'étanchéité (440 ; 540) conçu pour s'étendre conjointement entre la première saillie (314(a) ; 414(a) ; 514(a) ; 614(a)) du premier enroulement et de la deuxième saillie latéralement adjacente (314(b) ; 414(b) ; 514(b) ; 614(b)) du deuxième enroulement.

7. Corps de tuyau flexible (300 ; 400 ; 500 ; 600) selon l'une quelconque des revendications précédentes, dans lequel la couche de barrière à la perméation (310 ; 410 ; 510 ; 610) et la gaine de pression interne (302 ; 402 ; 502 ; 602) sont au moins partiellement liées l'une à l'autre, et éventuellement
dans lequel la couche de barrière à la perméation (310 ; 410 ; 510 ; 610) comprend un métal et, de préférence, dans lequel le métal comprend de l'acier inoxydable ou un alliage comprenant au moins l'un parmi le nickel, le titane, l'aluminium, le zinc, le cuivre, l'étain ou l'argent.

8. Corps de tuyau flexible (300 ; 400 ; 500 ; 600) selon l'une quelconque des revendications précédentes, dans lequel la couche de barrière à la perméation (310 ; 410 ; 510 ; 610) comprend un matériau imperméable aux fluides.

9. Corps de tuyau flexible (300 ; 400 ; 500 ; 600) selon l'une quelconque des revendications précédentes, dans lequel la couche de lissage (330 ; 430 ; 530 ; 630) est conçue pour venir en prise avec une couche de barrière à la perméation (310 ; 410 ; 510 ; 610) comprenant un profil en coupe tel que la couche de lissage s'adapte par déformation au profil en coupe pour fournir une surface de réception destinée à venir en prise avec et recevoir la couche d'armure métallique enroulée en hélice (303 ; 403 ; 503 ; 603), et éventuellement :
a) dans lequel la couche de lissage (330 ; 430 ; 530 ; 630) relie au moins partiellement un premier enroulement du ruban de barrière à la perméation (312 ; 412 ; 512 ; 612) à un deuxième enroulement latéralement adjacent du ruban de barrière à la perméation, et/ou
b) dans lequel la couche de lissage (330 ; 430 ; 530 ; 630) s'adapte de manière déformable à un évidement du profil en coupe et, de préférence, se loge dans un évidement du profil en coupe, et/ou
c) dans lequel la surface de réception est une surface cylindrique.

10. Corps de tuyau flexible (300 ; 400 ; 500 ; 600) selon l'une quelconque des revendications précédentes, dans lequel la couche de lissage (330 ; 430 ; 530 ; 630) est une couche de polymère extrudée.

11. Colonne montante flexible comprenant le corps de tuyau flexible (300 ; 400 ; 500 ; 600) selon l'une quelconque des revendications précédentes.

12. Procédé de fabrication d'un corps de tuyau flexible (300 ; 400 ; 500 ; 600) destiné à un corps de transport de fluides de production, le procédé comprenant les étapes consistant à :
fournir une gaine de pression interne (302 ; 402 ; 502 ; 602) ;
fournir une couche de barrière à la perméation (310 ; 410 ; 510 ; 610) ;
fournir une couche de lissage (330 ; 430 ; 530 ; 630) radialement à l'extérieur de la couche de barrière à la perméation ; et
enrouler en hélice un ruban d'armure métallique radialement à l'extérieur de la couche de barrière à la perméation et de la couche de lissage, de sorte que la couche de barrière à la perméation et la couche de lissage sont disposées entre la couche radialement la plus interne du corps de tuyau flexible et la couche d'armure métallique enroulée en hélice (303 ; 403 ; 503 ; 603),
dans lequel l'étape de fourniture de la couche de barrière à la perméation consiste à enrouler en hélice au moins un ruban (312 ; 412 ; 512 ; 612) sur le corps de tuyau flexible,
dans lequel le ou les rubans enroulés en hélice (312 ; 412 ; 512 ; 612) de la couche de barrière à la perméation (310 ; 410 ; 510 ; 610) comprennent :
une partie corps (316 ; 416 ; 516 ; 616) conçue pour s'étendre autour d'une circonférence du corps de tuyau flexible ; et
une première saillie (314(a) ; 414(a) ; 514(a) ; 614(a)) et une deuxième saillie (314(b) ; 414(b) ; 514(b) ; 614(b)) en regard de la première saillie avec la partie de corps entre elles, et
dans lequel la couche de barrière à la perméation est enroulée de telle sorte que la deuxième saillie d'un premier enroulement de ruban est latéralement adjacente à une première saillie d'un deuxième enroulement de ruban,
**caractérisé en ce que** le procédé consiste en outre à fournir un élément de liaison (320 ; 420 ; 520 ; 620) conçu pour venir en prise à la fois avec la deuxième saillie du premier enroulement de ruban et la première saillie latéralement adjacente d'un deuxième enroulement de ruban.

13. Procédé selon la revendication 12, dans lequel :
a) le ruban (312 ; 412 ; 512 ; 612) est enroulé en hélice sur le corps de tuyau flexible (300 ; 400 ; 500 ; 600) selon un premier angle de pose par rapport à un axe du corps de tuyau flexible dans une plage allant de plus de 20° à moins de 87° et, de préférence, dans une plage allant de 50° à moins de 80°, et/ou
b) l'étape d'enroulement en hélice d'un ruban d'armure métallique radialement à l'extérieur de la couche de lissage (330 ; 430 ; 530 ; 630) consiste en outre à enrouler le ruban d'armure métallique sur le corps de tuyau flexible (300 ; 400 ; 500 ; 600) selon un deuxième angle de pose par rapport à un axe du corps de tuyau flexible d'au moins 80°, et éventuellement dans lequel une différence entre le premier angle de pose et le deuxième angle de pose est d'au moins 15° et, de préférence, d'au moins 30°, et/ou
c) la couche de lissage (330 ; 430 ; 530 ; 630) est enroulée en hélice directement sur la couche de barrière à la perméation (310 ; 410 ; 510 ; 610) de telle sorte que la couche de lissage forme au moins partiellement un pont d'un premier enroulement de la couche de barrière à la perméation à un deuxième enroulement latéralement adjacent de la couche de barrière à la perméation, et, éventuellement, dans lequel la couche de lissage se loge dans un évidement d'un profil en coupe d'au moins l'un du premier enroulement ou du deuxième enroulement, et éventuellement dans lequel la couche de lissage (330 ; 430 ; 530 ; 630) est une couche de polymère extrudée.
